(19) Europäisches Patentamt

European Patent Office

Office européen des brevets

(11) **EP 1 270 941 A2**

(12) **EUROPEAN PATENT APPLICATION**

(43) Date of publication:
**02.01.2003 Bulletin 2003/01**

(51) Int Cl.⁷: **F04B 27/08**, F04B 27/10, F04B 39/00, F16F 15/14

(21) Application number: **02014356.6**

(22) Date of filing: **27.06.2002**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **28.06.2001 JP 2001196633**

(71) Applicant: **Kabushiki Kaisha Toyota Jidoshokki Kariya-shi, Aichi-ken (JP)**

(72) Inventors:
 • **Kawata, Takeshi**
  **Kariya-shi, Aichi-ken (JP)**
 • **Kawaguchi, Masahiro**
  **Kariya-shi, Aichi-ken (JP)**

• **Ota, Masaki**
 **Kariya-shi, Aichi-ken (JP)**
• **Adaniya, Taku**
 **Kariya-shi, Aichi-ken (JP)**
• **Kanai, Akinobu**
 **Kariya-shi, Aichi-ken (JP)**
• **Suzuki, Takahiro**
 **Kariya-shi, Aichi-ken (JP)**

(74) Representative:
**Leson, Thomas Johannes Alois, Dipl.-Ing.
Tiedtke-Bühling-Kinne & Partner GbR,
TBK-Patent,
Bavariaring 4
80336 München (DE)**

(54) **Power transmission mechanism and compressor**

(57) A power transmission mechanism transmits power of an external drive source (E) to a rotary shaft (16). The transmission mechanism has a first rotor (17) rotated by the external power source (E). A second rotor (42A) is connected to the rotary shaft (16). The second rotor (42A, 55, 61) is coaxial with the first rotor (17) and coupled to the first rotor (17) transmit power to the first rotor (17). A disconnecting body disconnects power transmission from the first rotor (17) to the second rotor (42A) when an excessive transmission torque is generated between the rotors (17, 42A). A dynamic damper is provided in at least one of the rotors (17, 42A). The dynamic damper has a weight (47, 48) that swings like a pendulum. The axis of the pendulum motion of the weight (47, 48) is separated by a predetermined distance from and is substantially parallel to the rotation axis of the corresponding rotor.

**Fig.1**

## Description

### BACKGROUND OF THE INVENTION

The present invention relates to a power transmission mechanism having a power transmission means that is located between two rotors and disconnects power transmission from one of the rotors to the other when an excessive transmission torque is generated between the rotors.

Japanese Utility Model Publication No. 6-39105 discloses a compressor having such a power transmission mechanism.

The compressor disclosed in the publication includes a pulley (first rotor), a transmission disk (second rotor), and a shaft (driven rotary shaft). The pulley is rotatably supported by a housing (support). The shaft is rotatably supported by the housing. The transmission disk is secured to the shaft to rotate integrally with the shaft. The rotors are coupled to each other by a breakable member (power transmission disconnecting body). The breakable member is located in a power transmission path and permits power to be transmitted between the rotors. When receiving an excessive load, the breakable member breaks.

When there is a malfunction in the compressor and a transmission torque between the pulley and the transmission disk exceeds a threshold level, the breakable member breaks and power transmission from the pulley to the transmission disk is disconnected.

The power transmission disconnecting body does not disconnect the power transmission as long as the level of the transmission torque is normal. When the transmission torque is excessive due to an abnormality, the power transmission disconnecting body disconnects the power transmission.

However, in a typical compressor, the transmission torque between the first rotor and the second rotor fluctuates relatively greatly in a normal state. The values of the peaks of the torque fluctuation are close to the threshold torque level at which the power transmission is disconnected. This reduces the design margin of the power transmission disconnecting body. The reduced design margin adds to difficulty in designing.

### SUMMARY OF THE INVENTION

Accordingly, it is a first objective of the present invention to facilitate designing of a power transmission mechanism that does not disconnect power transmission while a power transmission disconnecting body is in a normal power transmission state and disconnects power transmission when transmission torque is excessive.

A second objective of the present invention is to provide a compressor that uses the power transmission mechanism.

To achieve the foregoing and other objectives and in accordance with the purpose of the present invention, a power transmission mechanism for transmitting power of an external drive source to a rotary shaft is provided. The transmission mechanism includes a first rotor, a second rotor, a disconnecting body, a dynamic damper. The first rotor is rotated by the external power source. The second rotor is connected to the rotary shaft. The second rotor is coaxial with the first rotor and coupled to the first rotor transmit power to the first rotor. The disconnecting body disconnects power transmission from the first rotor to the second rotor when an excessive transmission torque is generated between the rotors. The dynamic damper is provided in at least one of the rotors. The dynamic damper has a weight that swings like a pendulum. The axis of the pendulum motion of the weight is separated by a predetermined distance from and is substantially parallel to the rotation axis of the corresponding rotor.

Other aspects and advantages of the invention will become apparent from the following description, taken in conjunction with the accompanying drawings, illustrating by way of example the principles of the invention.

### BRIEF DESCRIPTION OF THE DRAWINGS

The invention, together with objects and advantages thereof, may best be understood by reference to the following description of the presently preferred embodiments together with the accompanying drawings in which:

Fig. 1 is a cross-sectional view illustrating a compressor having a power transmission mechanism according to a first embodiment of the present invention;
Fig. 2(a) is a front view illustrating the power transmission mechanism of the compressor shown in Fig. 1;
Fig. 2(b) is a cross-sectional view taken along line 2(b)-2(b) of Fig. 2(a);
Fig. 3(a) is a front view illustrating a power transmission mechanism according to a second embodiment; Fig. 3(b) is a cross-sectional view taken along line 3(b)-3(b) of Fig. 3(a);
Fig. 4(a) is a front view illustrating a power transmission mechanism according to a third embodiment; Fig. 4(b) is a cross-sectional view taken along line 4(b)-4(b) of Fig. 4(a);
Fig. 5(a) is a front view illustrating a power transmission mechanism according to a fourth embodiment; Fig. 5(b) is a cross-sectional view taken along line 5(b)-5(b) of Fig. 5(a);
Fig. 6 is a front view showing a state of the power transmission mechanism of Fig. 5(a); and
Fig. 7 is a partial front view showing the power transmission mechanism of Fig. 5(a).

DETAILED DESCRIPTION OF THE PREFERRED EMBODIMENTS

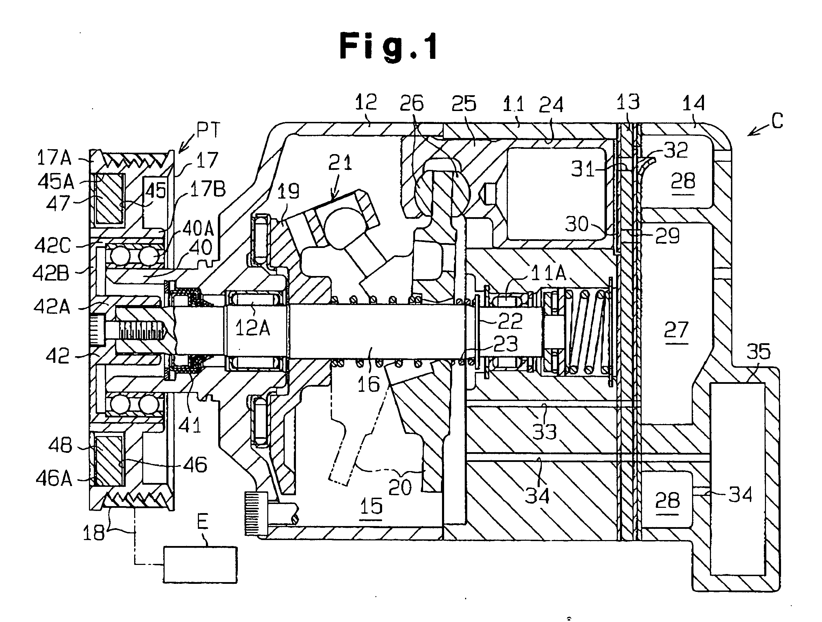

A compressor C according to a first embodiment of the present invention will now be described with reference to Figs. 1 to 2(b). The left end of the compressor C in Fig. 1 is defined as the front of the compressor, and the right end is defined as the rear of the compressor C.

The compressor C forms a part of a vehicular air conditioner. As shown in Fig. 1, the compressor C includes a cylinder block 11, a front housing member 12, a valve plate assembly 13, and a rear housing member 14. The front housing member 12 is secured to the front end of the cylinder block 11. The rear housing member 14 is secured to the rear end of the cylinder block 11 with the valve plate assembly 13 in between. The cylinder block 11, the front housing 12, the valve plate assembly 13, and the rear housing member 14 form the housing of the compressor C.

The cylinder block 11 and the front housing member 12 define a crank chamber 15 in between.

A rotary shaft 16 in this embodiment, is housed in the compressor housing (supporting body) and extends through the crank chamber 15. The front portion of the rotary shaft 16 is supported by a radial bearing 12A located in the front wall of the front housing member 12. The rear portion of the rotary shaft 16 is supported by a radial bearing 11A located in the cylinder block 11.

A support cylinder 40 is formed at the front end of the front housing member 12. The front end portion of the rotary shaft 16 extends through the front wall of the front housing member 12 and is located in the support cylinder 40. A power transmission mechanism PT is fixed to the front end of the rotary shaft 16. The power transmission mechanism PT includes a pulley 17 (first rotor). The front end of the rotary shaft 16 is coupled to an external drive source, which is a vehicular engine E in this embodiment, by the power transmission mechanism PT and a belt 18, which is wound around the pulley 17. The power transmission mechanism PT and the compressor form a rotary machine.

A lug plate 19 is coupled to the rotary shaft 16 and is located in the crank chamber 15. The lug plate 19 rotates integrally with the rotary shaft 16. A cam plate, which is a swash plate 20 in this embodiment, is housed in the crank chamber 15. The swash plate 20 slides along and inclines with respect to the rotary shaft 16. The swash plate 20 is coupled to the lug plate 19 by the hinge mechanism 21. The lug plate 19 permits the swash plate 20 to rotate integrally with the rotary shaft 16 and to incline with respect to the rotary shaft 16 while sliding along the rotation axis of the rotary shaft 16.

A snap ring 22 is fitted about the rotary shaft 16. A spring 23 extends between the snap ring 22 and the swash plate 20. The snap ring 22 and the spring 23 limit the minimum inclination angle of the swash plate 20. At the minimum inclination angle of the swash plate 20, the angle defined by the swash plate 20 and the axis of the rotary shaft 16 is closest to ninety degrees.

Cylinder bores 24 (only one is shown in Fig. 1) are formed in the cylinder block 11. The cylinder bores 24 are located about the rotation axis of the rotary shaft 16. A single-headed piston 25 is reciprocally housed in each cylinder bore 24. The front and rear openings of each cylinder bore 24 are closed by the associated piston 25 and the valve plate assembly 13. A compression chamber is defined in each cylinder bore 24. The volume of the compression chamber changes according to the reciprocation of the corresponding piston 24. Each piston 25 is coupled to the peripheral portion of the swash plate 20 by a pair of shoes 26. When the swash plate 20 is rotated by rotation of the rotary shaft 16, the shoes 26 convert the rotation into reciprocation of each piston 25.

The cylinder block 11 (cylinder bores 24), the rotary shaft 16, the lug plate 19, the swash plate 20, the hinge mechanism 21, the pistons 25, and the shoes 26 form a piston type variable displacement compression mechanism.

Sets of suction ports 29 and suction valve flaps 30 and sets of discharge ports 31 and discharge valve flaps 32 are formed in the valve plate assembly 13. Each set of the suction port 29 and the corresponding suction valve flap 30 and each set of the discharge port 31 and the corresponding discharge valve flap 30 correspond to one of the cylinder bores 24 (compression chambers).

A suction chamber 27 and a discharge chamber 28 are defined in the rear housing member 14. The front ends of the suction chamber 27 and the discharge chamber 28 are closed by the valve plate assembly 13. As each piston 25 moves from the top dead center position to the bottom dead center position, refrigerant gas is drawn into the corresponding cylinder bore 24 (compression chamber) through the corresponding suction port 29 while flexing the suction valve flap 30 to an open position. Low pressure refrigerant gas that is drawn into the cylinder bore 24 is compressed to a predetermined pressure as the piston 25 is moved from the bottom dead center position to the top dead center position. Then, the gas is discharged to the discharge chamber 28 through the corresponding discharge port 31 while flexing the discharge valve flap 32 to an open position.

The suction chamber 27 is connected to the discharge chamber 28 by an external refrigerant circuit (not shown). Refrigerant that is discharged from the discharge chamber 28 flows into the external refrigerant circuit. The external refrigerant circuit performs heat exchange using the refrigerant. The refrigerant is drawn into the suction chamber 27 from the external refrigerant circuit. Then, the refrigerant is drawn into each cylinder bore 24 to be compressed again.

A bleed passage 33 is formed in the housing to connect the crank chamber 15 with the suction chamber 27. A supply passage 34 is formed in the housing to connect the discharge chamber 28 with the crank chamber 15. A control valve 35 is located in the supply passage 34 to regulate the opening degree of the supply passage 34.

The opening of the control valve 35 is adjusted to control the flow rate of highly pressurized gas supplied to the crank chamber 15 through the supply passage 34. The pressure in the crank chamber 15 (crank chamber pressure Pc) is determined by the ratio of the gas supplied to the crank chamber 15 through the supply passage 34 and the flow rate of refrigerant gas conducted out from the crank chamber 15 through Lhe bleed passage 33. As the crank chamber pressure Pc varies, the difference between the crank chamber pressure Pc and the pressure in the compression chambers varies, which changes the inclination angle of the swash plate 20. Accordingly, the stroke of each piston 25, or the compressor displacement during one rotation of the rotary shaft 16, is varied.

As shown in Figs. 1 to 2(b), the support cylinder 40 protrudes from the front wall of the front housing member 12 and surrounds the front portion of the rotary shaft 16.

A lip seal 41 is located in the support cylinder 40 to fill the space between the support cylinder 40 and the rotary shaft 16. The lip seal 41 prevents refrigerant from escaping the crank chamber 15 through the space between the support cylinder 40 and the rotary shaft 16.

A torque receiving member 42 is fixed to the front end of the rotary shaft 16. The torque receiving member 42 rotates integrally with the rotary shaft 16. The torque receiving member 42 includes a boss 42A, which functions as a second rotor. The boss 42A is fitted in the support cylinder 40 and is forward of the lip seal 41. The torque receiving member 42 is coupled to the rotary shaft 16 at the boss 42A. The torque receiving member 42 also includes a pulley seat 42C, which surrounds the boss 42A and is coupled to the boss 42A by spokes 42B. The boss 42A, the pulley seat 42C, and the spokes 42B are formed integrally. The spokes 42B function as power transmission disconnecting body (breakable members). A radial bearing 40A is fitted about the support cylinder 40. The outer ring of the radial bearing 40A is secured to the inner surface of the pulley seat 42C.

The pulley 17 is fixed to the outer surface of the pulley seat 42C.

The pulley 17 has a belt receiving portion 17A, about which the belt 18 is wound. The belt 18 transmits power (torque) of the output shaft of the engine E to the pulley 17. The pulley 17 also has an inner cylinder 17B. The pulley 17 is coupled to the torque receiving member 42 by fitting the inner cylinder 17B about the pulley seat 42C so that the pulley 17 rotate integrally with the torque receiving member 42.

The spokes 42B, the number of which is three in this embodiment, radially extends from the boss 42A to the pulley seat 42C. The spokes 42B transmit power between the boss 42A and the pulley seat 42C. In other words, the spokes 42B are located in the power transmission path between the pulley 17 and the boss 42A.

In this embodiment, the torque receiving member 42, which includes the integrally formed boss 42A, the spokes 42B, and the pulley seat 42C, is formed with sintered metal. The fatigue ratio $\sigma_W/\sigma_B$ of the sintered metal is about 0.5. The sign $\sigma_W$ represents the fatigue limit and the sign $\sigma_B$ represents the tensile strength.

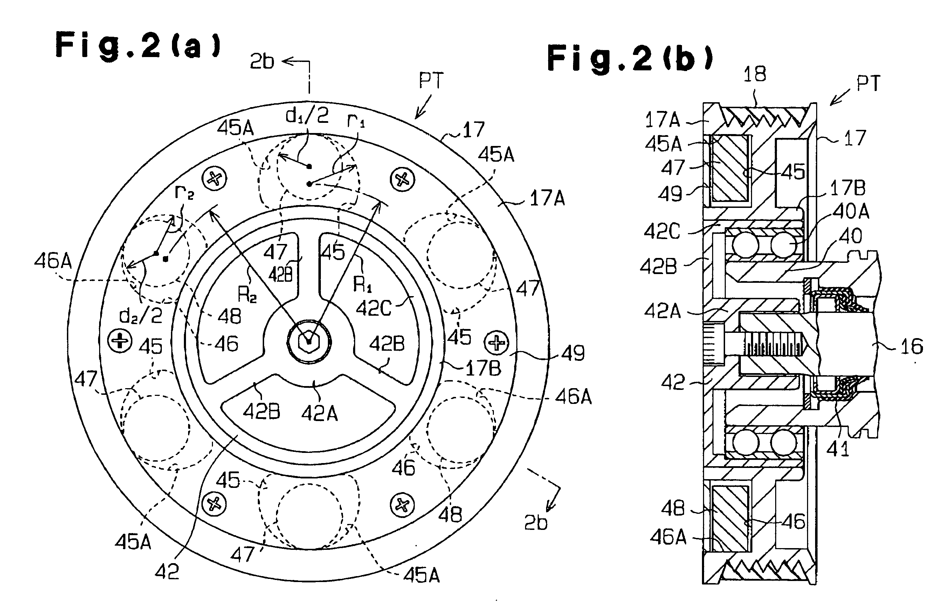

Four weight receptacles 45 and two weight receptacles 46 (one of each is shown in Figs. 1 and 2(b)) are formed in the pulley 17 between the belt receiving portion 17A and the inner cylinder 17B. The weight receptacles 45, 46 function as weight guides. The weight receptacles 45, 46 are angularly spaced by substantially equal intervals to minimize the displacement of the center of gravity of the pulley 17 from the rotation axis of the pulley 17.

Each weight receptacle 45 has a weight guide surface 45A, and each weight receptacle 46 has a weight guide surface 46A. The cross-section of each of the guide surfaces 45A and 46A is arcuate along a plane perpendicular to the rotation axis of the pulley 17. Each weight guide surface 45A forms a part of an imaginary cylinder, the axis of which is parallel to the rotation axis of the pulley 17. The radius of the imaginary cylinder is represented by $r_1$, and the axis of the imaginary cylinder is spaced from the rotation axis of the pulley 17 by a distance $R_1$. Each weight guide surface 46A forms a part of an imaginary cylinder, the axis of which is parallel to the rotation axis of the pulley 17. The radius of the imaginary cylinder is represented by $r_2$, and the axis of the imaginary cylinder is spaced from the rotation axis of the pulley 17 by a distance $R_2$.

A weight, which is a roller 47, is accommodated in the weight receptacle 45. Also, a weight, which is a roller 48, is accommodated in the weight receptacle 46. The diameter and the mass of the roller 47 are represented by $d_1$ and $m_1$. The diameter and the mass of the roller 48 are represented by $d_2$ and m2. Each roller 47 rolls in the circumferential direction along the weight guide surface 45A of the corresponding weight receptacle 45. Each roller 48 rolls in the circumferential direction along the weight guide surface 46A of the corresponding weight receptacle 46. An annular lid 49 is fixed to the front face of the pulley 17 by bolts. The lid 49 covers the weight receptacles 45, 46 to prevent the rollers 47, 48 from falling off the weight receptacles 45, 46.

When the compressor C is being driven by the engine E, or when the rotary shaft 16 is rotating, centrifugal force causes each roller 47, 48 to contact the corresponding guide surface 45A, 46A (see Figs. 1 to 2(b)). If torque fluctuation is generated due to, for example, torsional vibrations of the rotary shaft 16, each roller 47, 48 starts reciprocating along the guide surface 45A, 46A of the corresponding weight receptacle 45, 46. In other words, each roller 47, 48 moves along the circumferential direction of the guide surface 45A, 46A. That is, each roller 47, 48, or the center of gravity of each roller 47, 48, swings like a pendulum about the axis of an imaginary cylinder that includes the corresponding guide surface 45A, 46A. That is, each roller 47, 48 acts as a centrifugal pendulum when the compressor C is being driven by the engine E. The size and mass of the rollers 47, 48 and the locations of the rollers 47, 48 in the pulley 17 are determined such that the torque fluctuation is suppressed by pendulum motion of the rollers 47, 48.

The pulley 17 (the weight receptacles 45, 46) and the rollers 47, 48 form a dynamic damper.

The settings of the rollers 47, 48, which function as centrifugal pendulums, will now be described.

Each roller 47, 48 (centrifugal pendulum) suppresses the amplitude of torque fluctuation when the frequency of the fluctuation is equal to the characteristic frequency of the roller 47, 48. Therefore, the location, the size, and the mass of each roller 47, 48 are determined such that the characteristic frequency of the roller 47, 48 is set equal to the frequency of a peak of the torque fluctuation. Accordingly, the peak of the torque fluctuation is suppressed, and the influence of the torque fluctuation is effectively reduced. A peak of the torque fluctuation represents a peak of the fluctuation range, or a rotation order component.

The frequency of the torque fluctuation and the characteristic frequency of each roller 47, 48 are proportional to the angular velocity $\omega_1$ of the rotary shaft 16, which corresponds to the speed of the rotary shaft 16. The frequency of the torque fluctuation when its amplitude is the greatest is represented by the product of the rotation speed of the rotary shaft 16 per unit time $(\omega_1/2\pi)$ and the number N of the cylinder bores 24. That is, the frequency is represented by the formula $(\omega_1/2\pi) \cdot N$.

Through experiments, it was confirmed that an nth greatest peak (n is a natural number) of the torque fluctuation has a value equal to a product $n \cdot (\omega_1/2\pi) \cdot N$.

The characteristic frequency of each roller 47, 48 is obtained by multiplying the rotation speed of the rotary shaft 16 per unit time $(\omega_1/2\pi)$ with the square root of the ratio R/r. The sign R represents the distance between the rotation axis of the pulley 17 (a rotor having weights that swing like pendulums) and the axis of the pendulum motion of each roller 47, 48. The sign r represents the distance between the axis of the pendulum motion of each roller 47, 48 and the center of gravity of the roller 47, 48.

Accordingly, by equalizing the square root of the ratio R/r with the product $n \cdot N$, the characteristic frequency of each roller 47, 48 is equalized with the frequency of the nth greatest peak of the torque fluctuation. Accordingly, the torque fluctuation at the nth greatest peak is suppressed.

To suppress the greatest peak of the torque fluctuation, the values of the distances R and r of the rollers 47 are determined such that the square root of the ratio R/r of the rollers 47 is equal to N, or the value of the product n·N when n is one. To suppress the second greatest peak of the torque fluctuation, the values of the distances R and r of the rollers 48 are determined such that the square root of the ratio R/r of the rollers 48 is equal to 2N, or the value of the product $n \cdot N$ when n is two.

The torque produced about the rotation axis of the pulley 17 by the rollers 47 is represented by a sign $T_1$. The torque produced about the rotation axis of the pulley 17 by the rollers 48 is represented by a sign $T_2$. To effectively reduce peaks of the torque fluctuation by the pendulum motion of the rollers 47, 48, the torques $T_1$, $T_2$ need to counter the torque fluctuation and the amplitudes of the torques $T_1$, $T_2$ need to be equal to the amplitude of the peaks of the fluctuation. When the frequency of a peak of the torque fluctuation is equal to the characteristic frequencies of the rollers 47, 48, the torques $T_1$, $T_2$ are represented by the following equations.

$$(\text{Equation 1})$$

$$T_1 = m_{t1} \cdot (\omega_{a1})^2 \cdot (R+r) \cdot R \cdot \varphi_1$$

$$(\text{Equation 2})$$

$$T_2 = m_{t2} \cdot (\omega_{a2})^2 \cdot (R+r) \cdot R \cdot \varphi_2$$

The sign $m_{t1}$ represents the total weight of the rollers 47 $(m_{t1}=4m_1)$, and the $\varphi_1$. The sign $m_{t2}$ represents the total weight of the rollers 48 $(m_{t2}=2m2)$, and the sign $\omega_{a2}$ is the average angular velocity of the rollers 48 when the rollers 48 swing in a minute angle $\varphi_2$.

The masses $m_{t1}$, $m_{t2}$ of the rollers 47, 48 are maximized to minimize the values R, r, and $\varphi_1$, $\varphi_2$, so that the size of the pulley 17 is minimized, and the torques $T_1$, $T_2$ are maximized.

The axis of each imaginary cylinder that includes one of the weight guide surfaces 45A coincides with the axis, or fulcrum, of the pendulum motion of the corresponding roller 47. Likewise, the axis of each imaginary cylinder that includes one of the weight guide surfaces 46A coincides with the axis, or fulcrum, of the pendulum motion of the corresponding roller 48. That is, the distance $R_1$ between the rotation axis of the pulley 17 and the axis of each imaginary cylinder that includes one of the weight guide surfaces 45A corresponds to the distance R for each roller 47. Likewise, the distance $R_2$ between the rotation axis of the pulley 17 and the axis of each imaginary cylinder that includes one of the weight guide surfaces 46A corresponds to the distance R for each roller 48.

The distance between the axis of the pendulum motion of each roller 47 and the center of gravity of the roller 47 is equal to the value obtained by subtracting the half of the diameter $d_1$ of the roller 47 from the radius $r_1$ of the corresponding imaginary cylinder. Likewise, the distance between the axis of the pendulum motion of each roller 48 and the center of gravity of the roller 48 is equal to the value obtained by subtracting the half of the diameter $d_2$ of the roller 48 from the radius $r_2$ of the corresponding imaginary cylinder. That is, the difference $(r_1-(d_1/2))$ corresponds to the distance r for each roller 47. Likewise, the difference $(r_2-(d_2/2))$ corresponds to the distance r for each roller 48.

To suppress the greatest peak of the torque fluctuation, the values of the distances $R_1$, $r_1$, and the diameter $d_1$ of each roller 47 are determined such that the square root of $R_1/(r_1-(d_1/2))$, which corresponds to the square root of the ratio R/r, is equal to N, or the value of the product n·N when n is one. To suppress the second greatest peak of the torque fluctuation, the values of the distances $R_2$, $r_2$, and the diameter $d_2$ of each roller 48 are determined such that the square root of $R_2/(r_2-(d_2/2))$, which corresponds to the square root of the ratio R/r, is equal to 2N, or the value of the product n·N when n is two.

The settings are determined by regarding each roller 47, 48 as a particle at the center of gravity.

The operation of the compressor C and the power transmission mechanism PT will now be described.

When the power of the engine E is supplied to the rotary shaft 16 through the pulley 17, the swash plate 20 rotates integrally with the rotary shaft 16. As the swash plate 20 rotates, each piston 25 reciprocates in the associated cylinder bore 24 by a stroke corresponding to the inclination angle of the swash plate 20. As a result, suction, compression and discharge of refrigerant gas are repeated in the cylinder bores 24.

If the opening degree of the control valve 35 is decreased, the flow rate of highly pressurized gas supplied to the crank chamber 15 from the discharge chamber 28 through the supply passage 34 is decreased. Accordingly, the crank chamber pressure Pc is lowered and the inclination angle of the swash plate 20 is increased. As a result, the displacement of the compressor C is increased. If the opening degree of the control valve 35 is increased, the flow rate of highly pressurized gas supplied to the crank chamber 15 from the discharge chamber 28 through the supply passage 34 is increased. Accordingly, the crank chamber pressure Pc is raised and the inclination angle of the swash plate 20 is decreased. As a result, the displacement of the compressor C is decreased.

During rotation of the rotary shaft 16, the compression reaction force of refrigerant and reaction force of reciprocation of the pistons 25 are transmitted to the rotary shaft 16 through the swash plate 20 and the hinge mechanism 21, which torsionally (rotationally) vibrates the rotary shaft 16. The torsional vibrations generate torque fluctuation. The torque fluctuation causes the compressor C to resonate. The torque fluctuations also produce resonance between the compressor C and external devices (the engine E and auxiliary devices), which are connected to the pulley 17 by the belt 18.

When the torque fluctuation is produced, the rollers 47,48 start swinging like pendulums. The pendulum motion of the rollers 47, 48 produces torques about the rotation axis of the pulley 17. The produced torques suppress the torque fluctuation. The characteristic frequencies of the rollers 47, 48 are equal to the frequencies of the first and second greatest peaks of the torque fluctuation. Therefore, the peaks of the torque fluctuation are suppressed, which effectively reduce the torque fluctuations of the pulley 17.

As long as the magnitude of the transmission torque between the pulley 17 and the boss 42A does not adversely affect the engine E, that is, as long as the transmission torque is within a normal power transmission state, the power is transmitted from the engine E to the rotary shaft 16.

Ilowever, if there is an abnormality in the compressor C, for example, if the compressor C is locked, and the transmission torque is excessive, the spokes 42B break due to the excessive load. Accordingly, the power transmission from the pulley 17 to the boss 42A is disconnected. This prevents the engine E from being adversely affected by the excessive torque.

The present embodiment has the following advantages.

(1) The rollers 47, 48 are provided in the pulley 17. The axis of each roller 47, 48 is spaced from the rotation axis of the pulley 17 by a predetermined distance and is parallel to the rotation axis of the pulley 17. Each roller 47, 48 swings like a pendulum about its axis. The pendulum motions of the rollers 47, 48 suppress peaks of the torque fluctuation. Accordingly, the magnitude of the transmission torque at which the power transmission is disconnected is set greatly different from peaks of the torque fluctuation in the normal power transmission state. Since the spokes 42B are not broken by the magnitude of transmission torque in the normal power transmission state but are broken when the transmission torque is excessive, a large margin is obtained. This facilitates designing.

Since the greatest peak of the torque fluctuation is suppressed, resonance produced in the power transmission mechanism PT and resonance produced between the compressor C and the external devices coupled to the pulley 17 by the belt 18 are suppressed.

Since the structure for suppressing resonance is provided in the power transmission mechanism PT, the rotary shaft 16 need not have any means for suppressing resonance. This reduces the weight and the size of the compressor C.

(2) The spokes 42B are located in the power transmission path between the pulley 17 and the boss 42A. When the transmission torque is excessive, the spokes 42B are broken so that the power transmission is disconnected. That is, in this embodiment, the power transmission between the first rotor (the pulley 17) and the second rotor (the boss 42A) is disconnected when the breakable members (the spokes 42B) are broken. Compared to a case where a coupler is located in the power transmission path between a first rotor and a second rotor to couple to the rotors and the coupler can be detached from at least one of the rotors, the present embodiment reduces the number of the parts.

(3) The torque receiving member 42 (the spokes 42B) is formed with sintered metal. Since the ductility of the sintered metal is relatively low, the threshold level of the transmission torque at which the spokes 42B are broken is easily determined. Also, the fatigue ratio $\sigma_W/\sigma_B$ of the sintered metal is easily set high. Therefore, the durability of the spokes 42B to withstand repetitive stress in the normal power transmission state is set relatively high. Also, the balance between the durability of the spokes 42B and the level of the transmission torque at which the spokes 42B are broken is easily optimized. Accordingly, it is easy to design the mechanism such that the spokes 42B have a satisfactory durability and do not break for the transmission torque in the normal transmission state, and break when the transmission torque is excessive.

(4) The pulley 17 has multiple types of weights (the rollers 47, 48) so that a plurality of components of rotation order in the rotation vibration produced in the pulley 17 are suppressed. Specifically, the greatest peak and the second greatest peak of the torque fluctuation are suppressed. Compared to a structure that suppresses only one of the components of the rotation order, the torque fluctuation is effectively suppressed in the normal power transmission state.

A second embodiment of the present invention will now be described. The second embodiment is the same as the first embodiment except for the structure of the power transmission mechanism PT. Mainly, the differences from the first embodiment will be discussed below, and same or like reference numerals are given to parts that are the same as or like corresponding parts of the first embodiment.

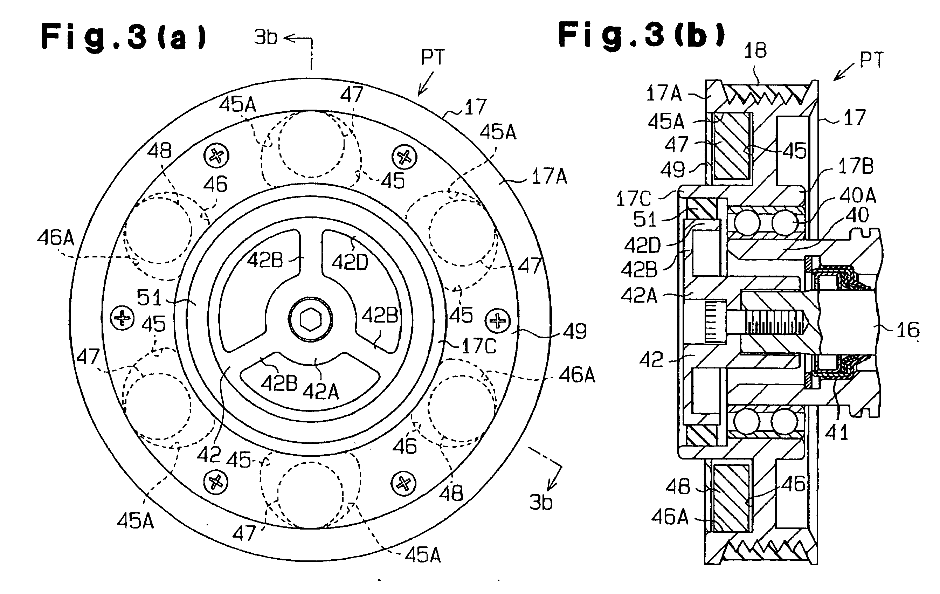

In the power transmission mechanism PT of the second embodiment, which is shown in Figs. 3(a) and 3(b), the pulley 17 rotates relative to the torque receiving member 42. An annular elastic member (shock absorbing member), or a rubber damper 51, is located in the power transmission path between the pulley 17 and the torque receiving member 42.

The torque receiving member 42 of the second embodiment has a boss 42A, a cylindrical damper seat 42D, and spokes 42B. The torque receiving member 42 is attached to the rotary shaft 16 at the boss 42A. The damper seat 42D is integrally formed with the boss 42A and the spokes 42B and is located forward of the support cylinder 40.

A radial bearing 40A is fitted about the support cylinder 40. The outer ring of the radial bearing 40A is directly attached to the inner surface of the inner cylinder 17B of the pulley 17 without any member corresponding to the pulley seat 42C of the first embodiment. That is, the pulley 17 is rotatably supported by the housing. Also, the pulley 17 rotates relative to the rotary shaft 16 and the torque receiving member 42 with the rotation axis of the pulley 17 is coaxial with those of the rotary shaft 16 and the torque receiving member 42.

The inner cylinder 17B of the pulley 17 includes an extended portion 17C, which is integrally formed with the inner cylinder 17B and protrudes forward. The rubber damper 51 couples the inner surface of the extended portion 17C and the outer surface of the damper seat 42D.

Torque fluctuation is suppressed in a manner similar to the first embodiment. That is, when torque fluctuation is produced while the rotary shaft 16 is rotating, the rollers 47, 48 swing like pendulums and produce torques. The produced torques suppress the torque fluctuation.

Further, since the pulley 17 is coupled to the rotary shaft 16 (the torque receiving member 42) by the rubber damper 51, torque fluctuation transmitted from the torque receiving member 42 to the pulley 17 is attenuated. As a result, the resonance produced by the torque fluctuations is effectively suppressed.

The rotation axes of the pulley 17 and the torque receiving member 42 may be displaced from each other due to errors. However, since the rubber damper 51 is located between the pulley and the torque receiving member 42 (the rotary shaft 16), stress applied to the radial bearings 12A, 40A due to the displacement of the axes is reduced.

The rubber damper 51 functions effectively when the frequency of the torque fluctuation is relatively high. The rollers 47, 48 function effectively when the frequency of the torque fluctuation is relatively low.

In addition to the advantages (1), (2), (3), and (4), the second embodiment has the following advantages.

(5) The rubber damper (damper member) 51 is located in the power transmission path between the pulley 17 and the torque receiving member 42, which attenuates the torque fluctuation transmitted from the torque receiving member 42 to the pulley 17. That is, in addition to the rollers 47, 48, the rubber damper 51 functions as a damper. Therefore, the resonance is effectively suppressed.

(6) The damper 51 (elastic member) is located between the pulley 17 and the torque receiving member 42, or in the power transmission path in between. The rotation axes of the pulley 17 and the torque receiving member 42 may be displaced from each other due to errors. However, deformation of the rubber damper 51 reduces stress applied to the radial bearings 12A, 40A due Lo the displacement of the axes. Therefore, the durability of the rotary machine, which includes the power transmission mechanism PT and the compressor C, is improved.

A third embodiment of the present invention will now be described. The third embodiment is the same as the second embodiment except for the structure of the power transmission mechanism PT. Mainly, the differences from the second embodiment will be discussed below, and same or like reference numerals are given to parts that are the same as or like corresponding parts of the second embodiment.

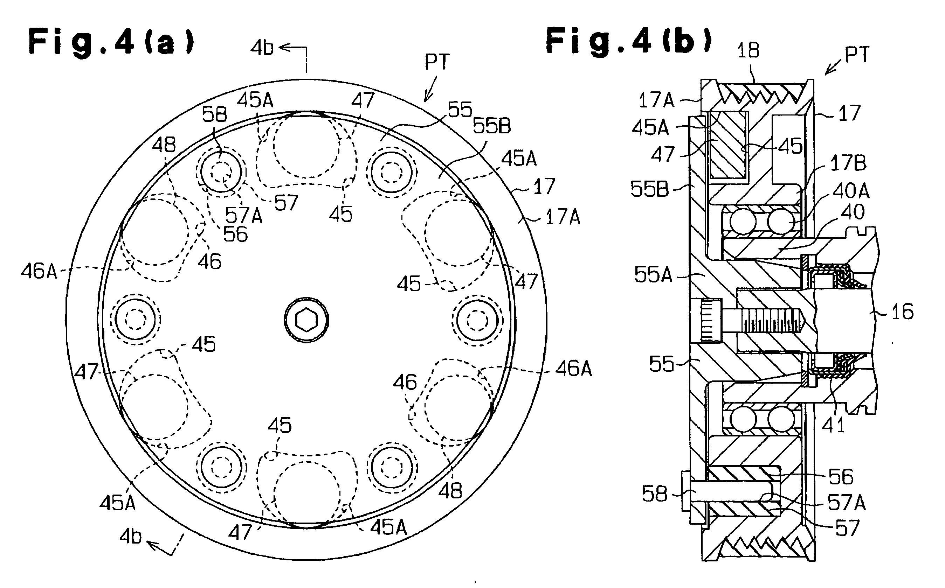

As shown in Figs. 4(a) and 4(b), the second rotor, which is a torque receiving member 55 in the third embodiment, is secured to the front end of the rotary shaft 16 to rotate integrally with the rotary shaft 16. The torque receiving portion 55 includes a boss 55A and a circular hub 55B. The boss 55A is fitted in the support cylinder 40 and is located forward of the lip seal 41. The hub 55B is integrally formed with the boss 55A and is located forward of the support cylinder 40.

Unlike the torque receiving member 42 of the first and second embodiments, the torque receiving member 55 of the third embodiment is not made of sintered metal but is made of a common iron material.

The hub 55B substantially covers the opening of each weight receptacle 45, 46. In the third embodiment, the lid 49 of the first and second embodiments is omitted. Instead, the hub 55B prevents the rollers 47, 48 from falling off the weight receptacles 45, 46.

A damper receptacle 56 is formed between each adjacent pair of the weight receptacles 45, 46. That is, the pulley 17 has the six damper receptacles 56.

In the third embodiment, the rubber damper 51 of the second embodiment, which is located between the outer surface of the damper seat 42D and the extended portion 17C, is omitted. Instead, tubular rubber dampers 57 each having a circular cross-section are provided. That is, each rubber damper 57 is fitted into one of the damper receptacles 56 and functions as an elastic member (damper member). The outer surface of each rubber damper 57 closely contacts the inner surface of the corresponding damper receptacle 56.

Each rubber damper 57 has a through hole 57A, the cross-section of which is circular. The hub 55B has power transmission pins 58 projecting rearward. The pings 55B function as power transmission disconnecting body (breakable members). Each pin 58 corresponds to one of the rubber dampers 57. The rear end (right end as viewed in the drawings) of each pin 58 is fitted in the through hole 57A of the corresponding damper 57. Each pin 58 is press fitted in a hole formed in the peripheral portion of the hub 55B, and extends in the axial direction of the torque receiving member 55. The number of the pins 58 is six in this embodiment.

The power transmission pins 58 are made of sintered metal. The fatigue ratio $\sigma_W/\sigma_B$ of the sintered metal is about 0.5. The sign $\sigma_W$ represents the fatigue limit and the sign $\sigma_B$ represents the tensile strength.

Power transmitted from the engine E to the pulley 17 is transmitted to the torque receiving member 55 through the rubber dampers 57 and the power transmission pins 58. The rubber dampers 57 and the power transmission pins 58 are located in the power transmission path between the pulley 17 and the torque receiving member 55. The rubber dampers 57 attenuate the torque fluctuation transmitted from the torque receiving member 55 to the pulley 17.

As long as the magnitude of the transmission torque between the pulley 17 and the torque receiving member 55 does not adversely affect the engine E, that is, as long as the transmission torque is within a normal power transmission state, the power is transmitted from the engine E to the rotary shaft 16.

However, if there is an abnormality in the compressor C, for example, if the compressor C is locked, and the transmission torque is excessive, the power transmission pins 58 break due to the excessive load. Accordingly, the power transmission from the pulley 17 to the hub 55B is disconnected. This prevents the engine E from being adversely affected by the excessive torque.

In addition to the advantages (1) to (5) and (6), the third embodiment has the following advantages.

(7) Each rubber damper 57 is located between each adjacent pair of the weight receptacles 45, 46. The spaces between the weight receptacles (45, 46) are effectively used for providing rubber dampers. The structure of the third embodiment reduces the axial size of the power transmission mechanism PT compared to the second embodiment.

(8) The hub 55B of the torque receiving member 55 prevents the rollers 47, 48 from falling off the weight receptacles (45, 46). Therefore, there is no need for providing an additional member for preventing the rollers (47, 48) from falling, such as the lid 49 in the first and second embodiments. This reduces the number of the parts and thus reduces the costs.

(9) Since the breakable members are the power transmission pins 58, the structure of the breakable members and the structure of the elastic members (rubber dampers 57) fitted about the breakable members are simplified.

A fourth embodiment will now be described. The fourth embodiment is greatly different from the third embodiment in the power transmission mechanism PT. Particularly, the power transmission mechanism PT of the fourth embodiment has no rubber member between the pulley and the torque receiving member. Instead, coupling members including leaf springs are provided. Mainly, the differences from the third embodiment will be discussed below, and same or like reference numerals are given to parts that are the same as or like corresponding parts of the third embodiment.

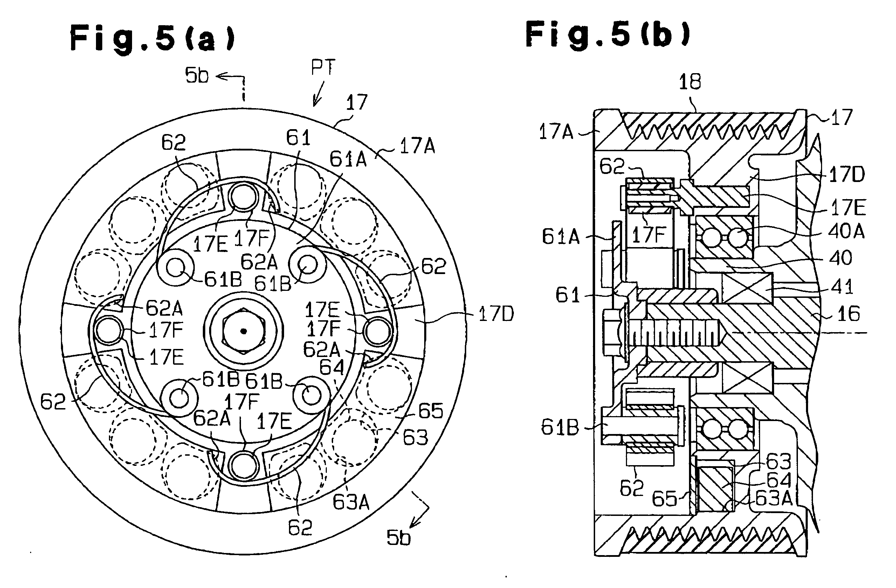

As shown in Figs. 5(a) and 5(b), the pulley 17 (the first rotor) of the fourth embodiment includes a belt receiving portion 17A and an annular base portion 17D. The base portion 17D projects inward from the inner surface of the belt receiving portion 17A. The base portion 17D is coupled to the support cylinder 40 with a radial bearing 40A such that the pulley 17 rotates relative to the support cylinder 40. The pulley 17 is coaxial with the rotary shaft 16 and rotates relative to the rotary shaft 16.

The second rotor, which is a torque receiving member 61 in the fourth embodiment, is secured to the front end of the rotary shaft 16 to rotate integrally with the rotary shaft 16. The torque receiving member 61 has a substantially circular hub 61A.

Support pins 61B, the number of which is four in this embodiment, are fixed to the peripheral portion of the rear face of the hub 61A. The support pins 61B are spaced by equal angular intervals (ninety degrees in this embodiment). The proximal end of a power transmission arm 62, which is a leaf spring, is wound about each support pin 61B at a cylindrical sleeve. The power transmission arms 62 function as coupling members. The proximal end of each power transmission arm 62 is rotated with the sleeve relative to the corresponding support pin 61B when rotational force about the pine 61B having a certain level is applied to the proximal end.

Engaging pins 17E, the number of which is four in this embodiment, are fixed to the peripheral portion of the front face of the pulley base portion 17D. The engaging pins 17E are spaced by equal angular intervals (ninety degrees in this embodiment). A cylindrical sleeve 17F is rotatably supported by each engaging pin 17E. The sleeves 17F are located closer to the peripheral portion of the pulley 17 than to the outer surface of the hub 61A.

The distal end of each power transmission arm 62 is engaged with the outer surface of one of the sleeves 17F. The distal portion of each power transmission arm 62 is hooked on the corresponding sleeve 17F. That is, each power transmission arm 62 extends through a position radially outside of the corresponding sleeve 17F and then is curved radially inward toward the rotation axis of the pulley 17. Specifically, each power transmission arm 62 is hooked on the corresponding cylindrical portion 17F at a hook 62A formed at the distal end. Each power transmission arm 62 is engaged with the corresponding sleeve 17F of the pulley 17 aL the hook 62A. The torque receiving member 61 and the pulley 17 can rotate relative to each other in a predetermined angular range. As long as the power transmission arms 62 are engaged with the sleeves 17F, power (torque) can be transmitted from the pulley 17 to the torque receiving member 61.

At least the power transmission arms 62 and the sleeves 17F form the power transmission disconnecting body.

Three weight guides, which are weight receptacles 63, are located between each adjacent pair of the engaging pins 17E. The weight receptacles 63 are formed in the pulley base portion 17D. Only one of the weight receptacles 63 is shown in Fig. 5 (b). The weight receptacles 63 in each set are angularly spaced by substantially equal intervals between the corresponding pair of the engaging pins 17E to minimize the displacement of the center of gravity of the pulley 17 from the rotation axis of the pulley 17.

Each weight receptacle 63 has a weight guide surface 63A. The cross-section of each of the guide surfaces 63A is arcuate along a plane perpendicular to the rotation axis of the pulley 17. Each guide surface 63A forms a part of an imaginary surface.

A weight, which is a rigid roller 64 in this embodiment, is accommodated in each weight receptacle 63. Each roller 64 rolls in the circumferential direction along the weight guide surface 63A of the corresponding weight receptacle 63. Four arcuate lids 65 are fixed to the front face of the pulley 17 by bolts. Each lid 65 covers a set of the weight receptacles 63 to prevent the corresponding 64 from falling off the weight receptacles 63.

When the torque fluctuation is produced while the rotary shaft 16 is rotating, each roller 64 reciprocates along the weight guide surface 63A in the corresponding weight receptacle 63. In other words, the roller 64 swings like a pendulum the fulcrum of which coincides with the axis of the imaginary cylinder containing the guide surface 63A.

The size and mass of the rollers 64 and the locations of the rollers 64 in the pulley 17 are determined such that the torque fluctuation is suppressed by pendulum motion of the rollers 64. Since the settings of the rollers 64 are similar to those of the rollers in the first to third embodiments, the description is omitted.

The pulley 17 (the weight receptacles 63) and the rollers 64 form a dynamic damper.

In Figs. 5(a) and 5(b), centrifugal force produced by rotation of the rotary shaft 16 causes each roller 64 to contact the corresponding guide surface 63A.

When the torque fluctuation is produced, each roller 64 starts swinging like a pendulum. The pendulum motion of each roller 64 generates torque about the rotation axis of the pulley 17. The produced torques suppress the torque fluctuation.

As long as the magnitude of the transmission torque between the pulley 17 and the torque receiving member 61 does not adversely affect the engine E, that is, as long as the transmission torque is within a normal power transmission state, the engagement between the hooks 62A and the sleeves 17F is maintained and the power is transmitted from the engine E to the rotary shaft 16.

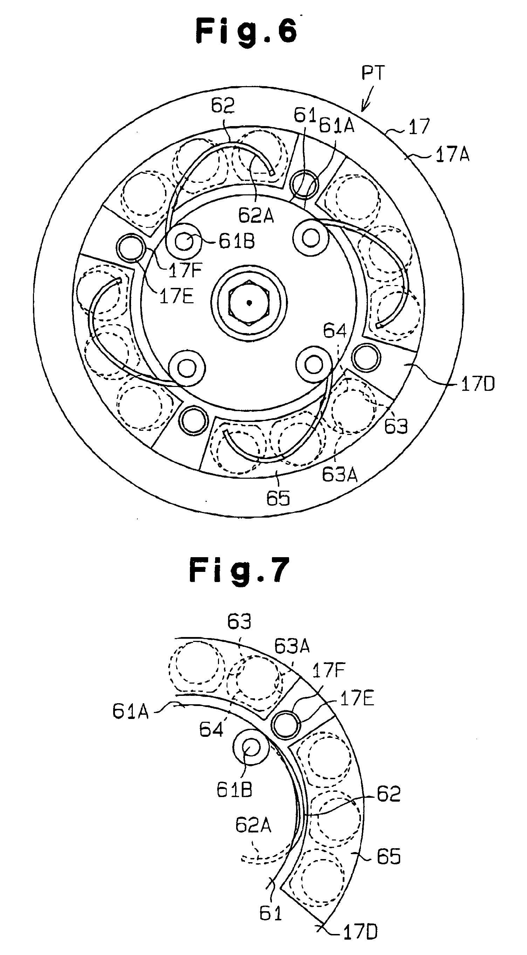

However, if there is an abnormality in the compressor C, for example, if the compressor C is locked, and the transmission torque is excessive, the elastic force of the power transmission arms 62 cannot maintain the engagement between the arms 62 and the sleeves 17F. Thus, each sleeve 17F comes off the corresponding hook 62A, which disengages the sleeve 17F from the arm 62. Accordingly, the power transmission from the pulley 17 to the torque receiving member 61 is disconnected (see Fig. 6). This prevents the engine E from being adversely affected by the excessive torque.

When the sleeves 17F are disengaged from the hooks 62A, the pulley 17 freely rotates relative Lo the torque receiving member 61. This causes each sleeve 17F to contact the back of one of the power transmission arms 62. Accordingly, each power transmission arm 62 receives a pivotal force about the corresponding support pin 61B due to the contact with the sleeve 17F. Then, each power transmission arm 62, together with the sleeve about which the proximal end of the arm 62 is wound, is rotated clockwise about the support pin 61B as viewed in Fig. 7. This moves the power transmission arm 62 to a position where the arm 62 does not contact the sleeves 17F.

Each power transmission arm 62 and the corresponding sleeve are rotated about the corresponding support pin 61B when receiving a rotational force that is greater than a predetermined level. Therefore, even if receiving an external force (for example, force based on vibration of the vehicle), the power transmission arms 62 are held at the position to avoid contacting the sleeves 17F. Therefore, each power transmission arm 62 does not contact the sleeves 17F, which consecutively pass over the arm 62. This prevents noise and vibration due to interference of the sleeves 17F with the arm 62.

When the torque fluctuation is produced while power is being transmitted between the pulley 17 and the torque receiving member 61, the magnitude of the force applied to each power transmission arm 62 by the corresponding sleeve 17F is repeatedly increased and decreased. Also, the contact position of the sleeve 17F on the hook 62A repeatedly moved. The degree of the elastic deformation of each power transmission arm 62 is changed in accordance with the changes of the force applied by the corresponding sleeve 17F. This reduces the fluctuation of the transmission torque between the pulley 17 and the torque receiving member 61. Also, friction between each engaging pin 17E and the corresponding sleeve 17F and friction between each power transmission arm 62 and the corresponding sleeve 17F attenuate the fluctuation of the transmission torque between the pulley 17 and the torque receiving member 61. That is, the power transmission arms 62 function as shock absorbing member (elastic members).

In addition to the advantage (1), the third embodiment has the following advantages.

(10) Friction between each engaging pin 17E and the corresponding sleeve 17F and friction between each power transmission arm 62 and the corresponding sleeve 17F attenuates the torque fluctuation transmitted from the torque receiving member 61 to the pulley 17. That is, in addition to the rollers 64, the frictions attenuate the torque fluctuation. Therefore, the resonance is effectively suppressed.

(11) The power transmission arms 62 (elastic members) are located between the pulley 17 and the torque receiving member 61, or in the power transmission path in between. The rotation axes of the pulley 17 and the torque receiving member 61 may be displaced from each other due to errors. However, deformation of the power transmission arms 62 reduces stress applied to the radial bearings 12A, 40A due to the displacement of the axes. Therefore, the durability of the rotary machine, which includes the power transmission mechanism PT and the compressor C, is improved.

(12) Power is transmitted between the pulley 17 and the torque receiving member 61 when the power transmission arms 62 are engaged with the sleeves 17F. The power transmission is disconnected when the power transmission arms 62 are disengaged from the sleeves 17F. Therefore, the power transmission disconnecting body can be reused without replacing any parts. Therefore, compared to a structure in which power transmission between the pulley 17 and the rotary shaft 16 is disconnected by breaking breakable members, the structure of the fourth embodiment reduces the costs for reusing the power transmission disconnecting body.

(13) The coupling members (the power transmission arms 62) are formed with leaf springs. This simplifies the structure of the coupling members. Also, the leaf springs reduces the fluctuation of the transmission torque between the pulley 17 and the torque receiving member 61.

It should be apparent to those skilled in the art that the present invention may be embodied in many other specific forms without departing from the spirit or scope of the invention. Particularly, it should be understood that the invention may be embodied in the following forms.

In the first embodiment, a portion of the boss 42A that is located forward of the support cylinder 40 may be radially enlarged, and a dynamic damper having weights may be provided in the enlarged portion. In this case, the dynamic damper need not be provided in the pulley 17.

In the second, third and fourth embodiments, the dynamic damper is provided in the pulley 17. However, the dynamic damper may be provided in the torque receiving member (42, 55, 61). Alternatively, both of the pulley 17 and the torque receiving member (42, 55, 61) may have the dynamic damper.

In the illustrated embodiments, spherical weights may be used.

In the illustrated embodiments, the number of weight receptacles (45, 46, 63), in which the rollers (47, 48, 64) are provided, may be changed. The number of the weight receptacles need not correspond to the cylinder bores of the compressor C.

In the illustrated embodiments, the cross-sectional shape of each weight receptacle (45, 46, 63) along a plane perpendicular to the rotation axis of the pulley 17 may be circular. This facilitates machining of the weight receptacles (45, 46, 63).

In the illustrated embodiments, the ratios R/r (the square root of the ratios R/r) may be equalized for all the weights. That is, the square root of the ratio R/r for all the rollers may be equalized at N, which is the product of n · N when n is one.

In the illustrated embodiments, the ratios R/r (the square root of the ratios R/r) may be three or more different values. In this case, since there are three or more values that correspond to the ratios R/r, three or more peaks of the torque fluctuation are suppressed. In this case, the values of n are preferably selected from three of more numbers in order from one. For example, when three numbers are selecLed, one, two and three arc preferably used. Accordingly, the square roots of the ratios R/r correspond to the numbers represented by the products n · N, in which n is one, two and three. Therefore, the three or more greatest peaks of the torque fluctuation are suppressed. That is, the resonance is effectively suppressed.

In the illustrated embodiments, the weight guide surface (45A, 46A, 63A) is formed in each of the weight receptacles (45, 46, 63) formed in the pulley 17, and each roller (47, 48, 64) swings like a pendulum along the corresponding guide surface. However, the pulley may have weights each of which is coupled to a fulcrum pin fixed to the pulley and swings like a pendulum. Alternatively, each weight may have a fulcrum pin, which is engaged with a hole formed in the pulley. In this case, each weight swings like a pendulum about the pin.

In the illustrated embodiments, the settings are determined by regarding each weight as a particle at the center of gravity. However, the settings are preferably determined by taking the inertial mass of each weight into consideration. For example, in the case of the rollers (47, 48, 64), the settings are preferably made based on the ratio 2R/3r instead on the ratio R/r to take the inertial mass into consideration. In this case, the equations 1 and 2 are replaced with the following equations 3 and 4.

(Equation 3)

$$T_1 = (3/2) - m_{t1} - (\omega_{a1})_2 \cdot (R+r) \cdot R \cdot \varphi_1$$

(Equation 4)

$$T_2 = (3/2) \cdot m_{t2} \cdot (\omega_{a2})^2 \cdot (R+r) \cdot R \cdot \varphi_2$$

If spherical weights are used instead of the rollers (47, 48, 64), the settings are preferably made based on the ratio 5R/7r to take the inertial mass into consideration. When the frequency of a peak of the torque fluctuation is equal to the characteristic frequency of each spherical weight, the torque T is represented by the following equation.

(Equation 5)

$$T = (7/5) \cdot m \cdot (\omega_a)^2 \cdot (R+r) \cdot R \cdot \varphi$$

In the equation 5, the sign m represents the total mass of the spherical weights, and the sign $\omega_a$ represents the average angular velocity of the spherical weights when the weights swing in a minute angle $\varphi$.

If the weights are not formed cylindrical or spherical, the settings are preferably made by taking the inertial mass of the weights into consideration so that the resonance is effectively suppressed.

In the first and second embodiments, the fatigue ratio $\sigma_W/\sigma_B$ of the sintered metal forming the breakable members (42B, 58) is substantially 0.5. However, the fatigue ratio $\sigma_W/\sigma_B$ may be changed. specifically, the fatigue ratio $\sigma_W/\sigma_B$ may be any value as long as the breakable members are broken when receiving excessive torque.

In the first to third embodiments, the breakable members (42B, 58) are made of sintered metal. However, the breakable members may be made of other material. For example, the breakable members may be made of low-carbon steel. The fatigue ratio $\sigma_W/\sigma_B$ of low-carbon steel is easily set high (approximately 0.5). Therefore, the durability of the breakable members (42B, 58) to withstand repetitive stress in the normal power transmission state is set relatively high. Also, the balance between the durability of the breakable members (42B, 58) and the level of the transmission torque at which the breakable members (42B, 58) are broken is easily optimized. Accordingly, it is easy to design the apparatus such that the breakable members (42B, 58) have a satisfactory durability and do not break for the transmission torque in the normal transmission state, and break when the transmission torque is excessive.

In the first to third embodiments, the breakable members (42B, 58) are made of metal. However, the breakable members may be made of other material. Specifically, as long as the breakable members are broken when receiving a torque that exceeds a threshold level, any material such as resin or ceramic may be used for the breakable members.

In the third embodiment, the power transmission pins 58 may be integrally formed with the hub 55B. In this case, if the torque receiving member 55, with which the power transmission pins 58 are integrally formed, is made of breakable material such as sintered metal, the power transmission is disconnected when the pins 58 are broken.

In the third embodiment, the number of the power transmission pins 58 is six and equal to the number of the weight receptacles 45, 46. However, the number of the pins 58 may be different from the number of the weight receptacles 45, 46. The number of the pins 58 located between an adjacent pair of weight receptacles may be changed. No pins 58 may be provided between one of the adjacent pairs of the weight receptacles.

In the third embodiment, each power transmission pin 58 is coupled to the pulley 17 with the corresponding rubber damper 57. However, the power transmission pins 58 may be directly coupled to the pulley 17 without the rubber dampers 57.

In the third embodiment, each power transmission pin 58 is fixed to the hub 55B and coupled to the pulley 17 with the corresponding rubber damper 57. However, the pins 58 may be fixed to the pulley 17 and coupled to the hub 55B with rubber dampers.

In the third embodiment, each power transmission pin 58 may be coupled to the hub 55B with a tubular shock absorbing member (rubber damper). In other words, the power transmission pins 58 may be coupled to both of the hub 55B and the pulley 17 with shock absorbing members such as rubber dampers.

In the third embodiment, the rubber dampers 57 are tubular and have circular cross-section. However, the cross-section of the rubber dampers 57 may be changed.

In the third embodiment, a space may exist between the inner surface of each damper receptacle 56 arid the corresponding rubber damper 57 or between the inner surface of each rubber damper 57 and the outer surface of the corresponding power transmission pin 58. That is, narrow spaces may exist as long as the power transmitting performance and the durability of the power transmission mechanism PT are not adversely affected.

In the second and third embodiments, the rubber dampers (51, 57) are used. However, dampers made of elasLomer may be used.

In the third embodiment, the rubber dampers 57 are used as shock absorbing members. However, sealed gel containers may be used as shock absorbing members and located in the power transmission path between the pulley 17 and the torque receiving member 42. For example, a cylindrical gel container may be located in each damper receptacle 56 and the rear end of the corresponding power°transmission pin 58 may be fitted in a hole formed in the gel container. In this structure, gel sealed in the gel containers attenuates the torque fluctuation transmitted from the torque receiving member 55 to the pulley 17 through the power transmission pins 58. The rotation axes of the pulley 17 and the torque receiving member 55 may be displaced from each other due to errors. However, deformation of the gel containers reduces stress applied to the radial bearings 12A, 40A due to the displacement of the axes. Instead of the gel containers, containers having fluid such as liquid or gas may be used as shock absorbing members. If fluid is used, the same advantages as the case where gel is used are achieved. However, gel attenuates vibration by a greater degree compared to fluid.

In the fourth embodiment, the power transmission arms 62 are formed with leaf springs. However, rigid arms may be used as coupling members. In this case, the proximal end of each rigid arm is rotatably coupled to the corresponding support pin 61B and a hook is formed at the distal end of the arm. The hook is engaged with the corresponding sleeve 17F. An urging member such as a spring is provided for each rigid arm to urge the hook to the sleeve 17F.

In the fourth embodiment, the power transmission arms 62 are formed with leaf springs. However, the power transmission springs 62 may be formed with wire springs.

In the fourth embodiment, the proximal end of each coupling member (62) may be supported at the pulley 17 and engaging pins may project from the hub 61A. In this case, a cylindrical member is fitted about each engaging pin, and the hook (62A) of each coupling member (62) is engaged with the corresponding cylindrical member.

The number of cylinder bores 24 in the compressor C may be changed. A typical compressor for a vehicular air conditioner has three to seven cylinder bores. If the number of the cylinder bores 24 is three, the fluctuation of torque transmitted between the pulley 17 and the torque receiving member 42 due to rotational vibration produced in the rotary shaft 16 is greater compared to a case where the number of the cylinders 24 is four or greater. That is, in a rotary machine that has three cylinder bores, the dynamic dampers and the shock absorbing members of the illustrated embodiment effectively suppress resonance.

In the illustrated embodiment, the power transmission mechanism PT is used for the compressor C, which has the single headed pistons 25. However, the mechanism PT may be used for a compressor that has double-headed pistons. In this type of compressor, cylinder bores are formed on either side of a crank chamber and each piston compresses gas in one of the pairs of the cylinder bores.

In the illustrated embodiment, the cam plate (the swash plate 20) rotates integrally with the rotary shaft 16. However, the present invention may be applied to a compressor in which a cam plate rotates relative to a rotary shaft. For example, the present invention may be applied to a wobble type compressor.

The pulley 17 may be used in a fixed displacement type compressor, in which the stroke of the pistons is constant.

In the illustrated embodiments, the present invention is applied to a reciprocal piston type compressor. However, the present invention may be applied to rotary compressors such as a scroll type compressor

In the illustrated embodiment, the first rotor is the pulley 17. However, a sprocket or a gear may be used as the first rotor.

In the illustrated embodiments, the bearing (40A) for rotatably support the first rotor (17) is directly attached to the housing, which support the rotary shaft 16. However, the bearing (40A) may be attached to the housing with another structure in between.

In the illustrated embodiments, the present invention is applied to the compressor C. However, the present invention may be applied to any apparatus that has a rotary shaft coupled to the power transmission mechanism PT, and torsional vibration is produced in the rotary shaft.

The axis of the pendulum motion of each weight need not be parallel to the rotation axis of the rotor in which the weights are provided. Specifically, the axis of the pendulum motion may be inclined relative to the rotation axis of the rotor in a range in which the maximum torque fluctuation is suppressed by a desirable degree.

Therefore, the present examples and embodiments are to be considered as illustrative and not restrictive and the invention is not to be limited to the details given herein, but may be modified within the scope and equivalence of the appended claims.

**Claims**

1. A power transmission mechanism for transmitting power of an external drive source (E) to a rotary shaft (16), the transmission mechanism **being characterized by:**

   a first rotor (17) rotated by an external power source;
   a second rotor (42A, 55, 61) connected to a rotary shaft (16), wherein the second rotor is coaxial to the first rotor (17) and coupled to the first rotor (17) to transmit power to the first rotor (17);
   a disconnecting body, which disconnects power transmission from the first rotor (17) to the second rotor (42A, 55, 61) when an excessive transmission torque is generated between the rotors; and
   a dynamic damper provided in at least one of the rotors, wherein the dynamic damper has a weight (47, 48, 64) that swings like a pendulum, wherein the axis of the pendulum motion of the weight (47, 48, 64) is separated by a predetermined distance from and is substantially parallel to the rotation axis of the corresponding rotor.

2. The power transmission mechanism according to claim 1, **characterized in that** the disconnecting body is a breakable member (42B, 58) located in a power transmission path between the rotors, wherein the breakable member (42B, 58) breaks when an excessive transmission torque is generated.

3. The power transmission mechanism according to claim 2, **characterized in that** the breakable member (42B, 58) is made of one of sintered metal and low-carbon steel.

4. The power transmission mechanism according to claim 2, **characterized in that** the first rotor (17) is rotatably supported by a support member, which rotatably supports the rotary shaft (16), and wherein the breakable member (58) is a pin (58) and is connected to at least one of the rotors via an elastic member (57, 62) fitted about the breakable member (42B, 58).

5. The power transmission mechanism according to claim 1, **characterized in that** the disconnecting body has a coupling member (62), which couples the rotors to each other to permit power to be transmitted between the rotors and engages with at least one of the rotors, wherein, when the coupling member (62) is disengaged from the one of the rotors, the power transmission between the rotors is disconnected.

6. The power transmission mechanism according to claim 5, **characterized in that** the coupling member (62) is a leaf spring.

7. The power transmission mechanism according to claim 1, **characterized in that** a shock absorbing member (62) is located in the power transmission path between the rotors.

8. The power transmission mechanism according to claim 7, **characterized in that** the second rotor (42A, 55, 61) is coupled to the rotary shaft (16) and integrally rotates with the rotary shaft (16), wherein the first rotor (17) is rotatably supported by a support member (11, 12, 13, 14), which rotatably supports the rotary shaft (16), and wherein the shock absorbing member is an elastic member (62).

9. The power transmission mechanism according to claim 1, **characterized in that** the weight (47, 48) is one of a plurality of weights (47, 48), wherein the weights (47, 48) are arranged or constructed to suppress a plurality of order components in rotational vibration generated in the corresponding rotor.

10. A compressor having the transmission power mechanism according to any one of claims 1 to 9.

11. The compressor according to claim 10 further being **characterized by** a piston type compression mechanism, which has a piston (25) accommodated in a cylinder bore (24), and wherein the compression mechanism compresses refrigerant in accordance with reciprocation of the piston (25).

12. The compressor according to claim 11, **characterized in that** the piston is one a plurality of pistons, and the cylinder bore is one of a plurality of cylinder bores (24), each of which accommodates one of the pistons, and wherein the number of the cylinder bores (24) is three, four, five, six or seven.

13. The compressor according to claim 12, **characterized in that** the number of the cylinder bores is three.

14. The compressor according to claim 13, **characterized in that** the compression mechanism is driven by the rotary shaft (16), and wherein the displacement per rotation of the rotary shaft (16) is varied.

# Fig.1

EP 1 270 941 A2

Fig.2(a)

Fig.2(b)

# Fig.3(a)

# Fig.3(b)

EP 1 270 941 A2

# Fig.4(a)

# Fig.4(b)

EP 1 270 941 A2

# Fig.5(a)

# Fig.5(b)

EP 1 270 941 A2

# Fig.6

# Fig.7